# EUROPEAN PATENT APPLICATION

(11) **EP 4 703 128 A1**
(43) Date of publication of application: **04.03.2026**
(21) Application number: 24794695.7
(22) Date of filing: 05.04.2024
(51) Int. Cl.: B29C 70/42, B29C 43/34, B29C 64/106, B29C 64/321, B29C 69/00, B29C 70/06, B33Y 10/00, B33Y 40/20

(54) **METHOD FOR PRODUCING FIBER-REINFORCED PLASTIC PRODUCT**

(30) Priority: 26.04.2023 JP 2023072800
(71) Applicant: MITSUBISHI GAS CHEMICAL COMPANY, INC., Chiyoda-ku Tokyo 100-8324 (JP)
(72) Inventor: KAWANO Kazuki, Yokohama-shi, Kanagawa 222-0033 (JP); ODAN Yusuke, Yokohama-shi, Kanagawa 222-0033 (JP); HIROOKA Nobuki, Yokohama-shi, Kanagawa 222-0033 (JP)
(74) Representative: Vossius & Partner Patentanwälte Rechtsanwälte mbB
(86) International application number: PCT/JP2024/014173
(87) International publication number: WO 2024/224999

(57) **Abstract**

[Problem] To provide a product made of fiber-reinforced plastic that is lightweight and has high mechanical strength.

[Solution] A method for producing a fiber-reinforced plastic product including fibers and a resin, the method including an additive manufacturing step, a first pressurization step, and a second pressurization step, in which the second pressurization step is a step of pressurizing, under heating, a product obtained through the first pressurization step, and of obtaining a product having a volume smaller than a volume of the product obtained through the first pressurization step.

## Description

### Technical Field

The present invention relates to a method for producing a fiber-reinforced plastic product.

### Background Art

Composite materials (fiber-reinforced plastics (FRP) such as inorganic fiber-reinforced plastics (such as carbon fiber-reinforced plastics (CFRP), glass fiber-reinforced plastics (GFRP), other ceramic fiber-reinforced plastics, and metal fiber-reinforced plastics), and organic fiber-reinforced plastics (such as aramid fiber-reinforced plastics and natural fiber-reinforced plastics (such as cellulose fiber-reinforced plastics)) are attracting attention. For example, in the aerospace industry and the automotive industry, CFRP is particularly attracting attention from the viewpoint of energy saving through weight reduction. Of course, CFRP is also attracting attention in fields besides the industries mentioned above. For example, CFRP is also used in products used in the leisure field.

Additive manufacturing techniques (Additive manufacturing: 3D printer fabrication technology) are known. This technology is described in the "Survey Report on Technology Trends of Patent Applications in Fiscal Year 2013 (Summary), 3D Printers" as follows. 3D printer (additive manufacturing techniques) refers to a process of creating an object by adhering material from a numerical representation of its three-dimensional shape. This process is often achieved by depositing a layer on top of another layer. The expression 3D printer is used in contrast to a two-dimensional output on paper. The term additive manufacturing is used in ASTM F2792-12a (Standard Terminology for Additive Manufacturing Technologies).

Thermoplastic resin laminated products made by using additive manufacturing (3D printer) have become more popular, even for personal use, because this technology allows free modeling of a desired shape. However, the mechanical properties of the resin itself were poor.

For example, Markforged Holding Corporation has proposed a 3D printer for CFRP. When a material takes a form containing fibers, the known concept of free modeling has expanded to an idea of free fiber orientation. For this reason, in the aerospace industry and the automotive industry, attempts have been made to develop CFRP products by additive manufacturing technology. In the machine parts industry as well, development of CFRP products has been attempted by additive manufacturing technology.

### Citation List

### Patent Document

Patent Document 1: JP 2016-78205 A
Patent Document 2: JP 2016-172317 A
Patent Document 3: JP 6388238 B
Patent Document 4: JP 6507203 B

### Summary of Invention

### Technical Problem

It has been difficult to produce a fiber-reinforced resin product having a solid figure shape (not a sheet (flat plate: plane) shape) only by additive manufacturing technology. In particular, when the content of fibers is increased as high as possible (the content of resin is relatively reduced) in order to improve the mechanical strength, it has been difficult to produce the product only by additive manufacturing technology.

An object of the present invention is to provide a technique using additive manufacturing technology for producing a product with high content of fibers (relatively low content of resin) and high mechanical strength.

### Solution to Problem

The present invention proposes
a method for producing a fiber-reinforced plastic product including fibers and a resin,
the method including an additive manufacturing step, a first pressurization step and a second pressurization step,
in which the second pressurization step is a step of pressurizing, under heating, a product obtained through the first pressurization step, and of obtaining a product having a volume smaller than a volume of the product obtained in the first pressurization step.

The present invention proposes
a method for producing a fiber-reinforced plastic product including fibers and a resin,
the method including an additive manufacturing step, a first pressurization step and a second pressurization step,
in which the additive manufacturing step is a step of obtaining a product in which not all of the fibers are integrally bonded together by the resin and the fibers are partially apart from each other.

The present invention proposes
a method for producing a fiber-reinforced plastic product including fibers and a resin,
the method including an additive manufacturing step, a first pressurization step and a second pressurization step
in which the first pressurization step is a step of pressurizing a product obtained through the additive manufacturing step, and obtaining a product in which most of the fibers are integrally bonded together by the resin and which has a curved portion.

The present invention proposes
a method for producing a fiber-reinforced plastic product including fibers and a resin,
the method including an additive manufacturing step, a first pressurization step and a second pressurization step
in which the additive manufacturing step is a step of obtaining a product in which not all of the fibers are integrally bonded together by the resin and the fibers are partially apart from each other, and
in which the first pressurization step is a step of pressurizing a product obtained through the additive manufacturing step, and of obtaining a product in which most of the fibers are integrally bonded together by the resin and which has a curved portion.

The present invention proposes
a method for producing a fiber-reinforced plastic product including fibers and a resin,
the method including an additive manufacturing step, a first pressurization step and a second pressurization step
in which the additive manufacturing step is a step of obtaining a product in which not all of the fibers are integrally bonded together by the resin and the fibers are partially apart from each other, and
in which the second pressurization step is a step of pressurizing, under heating, a product obtained through the first pressurization step, and of obtaining a product having a volume smaller than a volume of the product obtained through the first pressurization step.

The present invention proposes
a method for producing a fiber-reinforced plastic product including fibers and a resin,
the method including an additive manufacturing step, a first pressurization step and a second pressurization step
in which the additive manufacturing step is a step of obtaining a product in which not all of the fibers are integrally bonded together by the resin and the fibers are partially apart from each other
in which the first pressurization step is a step of pressurizing a product obtained through the additive manufacturing step, and of obtaining a product in which most of the fibers are integrally bonded together by the resin and which has a curved portion, and
in which the second pressurization step is a step of pressurizing, under heating, a product obtained through the first pressurization step, and of obtaining a product having a volume smaller than a volume of the product obtained through the first pressurization step.

The present invention proposes
a method for producing a fiber-reinforced plastic product including fibers and a resin,
the method including an additive manufacturing step, a first pressurization step and a second pressurization step,
in which a ratio of the fibers to the resin in the additive manufacturing step is such that (volume of the resin)/(volume of the fibers + volume of the resin) is 55/100 or less.

The present invention proposes,
a method for producing a fiber-reinforced plastic product including fibers and a resin,
the method including an additive manufacturing step, a first pressurization step and a second pressurization step,
in which a ratio of the fibers to the resin in the additive manufacturing step is such that (volume of the resin)/(volume of the fibers + volume of the resin) is 25/100 or more.

The present invention proposes the method for producing a fiber-reinforced plastic product, in which the additive manufacturing step is preferably a step of obtaining a product in which not all of the fibers are integrally bonded together by the resin, and the fibers are partially apart from each other.

The present invention proposes the method for producing a fiber-reinforced plastic product, in which the first pressurization step is preferably a step of pressurizing a product obtained through the additive manufacturing step, and of obtaining a product in which most of the fibers are integrally bonded together by the resin and which has a curved portion.

The present invention proposes the method for producing a fiber-reinforced plastic product, in which the second pressurization step is preferably a step of pressurizing, under heating, a product obtained through the first pressurization step, and of obtaining a product having a volume smaller than a volume of the product obtained through the first pressurization step.

The present invention proposes the method for producing a fiber-reinforced plastic product, in which the first pressurization step is preferably a step of stacking and pressurizing a plurality of products obtained through the additive manufacturing step.

The present invention proposes the method for producing a fiber-reinforced plastic product, in which pressure applied in the first pressurization step is preferably than pressure applied in the second pressurization step.

The present invention proposes the method for producing a fiber-reinforced plastic product, in which (pressure applied in the first pressurization step)/(pressure applied in the second pressurization step) is preferably 0.8 or less.

The present invention proposes the method for producing a fiber-reinforced plastic product, in which (pressure applied in the first pressurization step)/(pressure applied in the second pressurization step) is preferably 0.7 or less.

The present invention proposes the method for producing a fiber-reinforced plastic product, in which (pressure applied in the first pressurization step)/(pressure applied in the second pressurization step) is preferably 0.6 or less.

The present invention proposes the method for producing a fiber-reinforced plastic product, in which (pressure applied in the first pressurization step)/(pressure applied in the second pressurization step) is preferably 0.5 or less.

The present invention proposes the method for producing a fiber-reinforced plastic product, in which (pressure applied in the first pressurization step)/(pressure applied in the second pressurization step) is preferably 0.4 or less.

The present invention provides the method for producing a fiber-reinforced plastic product, in which (pressure applied in the first pressurization step)/(pressure applied in the second pressurization step) is preferably 0.05 or more.

The present invention proposes the method for producing a fiber-reinforced plastic product, in which (pressure applied in the first pressurization step)/(pressure applied in the second pressurization step) is preferably 0.1 or more.

The present invention proposes the method for producing a fiber-reinforced plastic product, in which (volume of product obtained through the first pressurization step)/(volume of product obtained through the second pressurization step) is preferably 2.5 or less.

The present invention proposes the method for producing a fiber-reinforced plastic product, in which (volume of product obtained through the first pressurization step)/(volume of product obtained through the second pressurization step) is preferably 2 or less.

The present invention proposes the method for producing a fiber-reinforced plastic product, in which (volume of product obtained through the first pressurization step)/(volume of product obtained through the second pressurization step) is preferably 1.5 or less.

The present invention provides the method for producing a fiber-reinforced plastic product, in which (volume of product obtained through the first pressurization step)/(volume of product obtained through the second pressurization step) is preferably 1.05 or more.

The present invention proposes a method for producing a fiber-reinforced plastic product, in which (volume of product obtained through the first pressurization step)/(volume of product obtained through the second pressurization step) is preferably 1.1 or more.

The present invention proposes the method for producing a fiber-reinforced plastic product, in which pressure applied in the first pressurization step is preferably equal to or higher than 0.8 kPa.

The present invention proposes the method for producing a fiber-reinforced plastic product, in which pressure applied in the first pressurization step is preferably equal to or higher than 4 kPa.

The present invention proposes the method for producing a fiber-reinforced plastic product, in which pressure applied in the first pressurization step is preferably equal to or lower than 8.0 × 10⁵ kPa.

The present invention proposes the method for producing a fiber-reinforced plastic product, in which pressure applied in the first pressurization step is preferably equal to or lower than 4.0 × 10⁵ kPa.

The present invention proposes the method for producing a fiber-reinforced plastic product, in which pressure applied in the second pressurization step is preferably equal to or higher than 1 kPa.

The present invention proposes the method for producing a fiber-reinforced plastic product, in which pressure applied in the second pressurization step is preferably equal to or higher than 5 kPa.

The present invention proposes the method for producing a fiber-reinforced plastic product, in which pressure applied in the second pressurization step is preferably equal to or lower than 1.0 × 10⁶ kPa.

The present invention proposes the method for producing a fiber-reinforced plastic product, in which pressure applied in the second pressurization step is preferably equal to or lower than 5.0 × 10⁵ kPa.

The present invention proposes the method for producing a fiber-reinforced plastic product, in which the first pressurization step is preferably a step of performing pressurization at a temperature equal to or higher than a melting temperature of a resin, the melting temperature being determined by a 1/2 method using a flowtester CFT-500D (available from Shimadzu Corporation).

The present invention proposes the method for producing a fiber-reinforced plastic product, in which the first pressurization step is preferably a step in which pressurization is carried out at a temperature equal to or higher than {(the melting temperature of the resin, which is determined by 1/2 method using a flowtester CFT-500D (available from Shimadzu Corporation)) + 10°C}.

The present invention proposes the method for producing a fiber-reinforced plastic product, in which the first pressurization step is preferably a step in which pressurization is carried out at a temperature equal to or higher than {(the melting temperature of the resin, which is determined by 1/2 method using a flowtester CFT-500D (available from Shimadzu Corporation)) + 20°C}.

The present invention proposes the method for producing a fiber-reinforced plastic product, in which the second pressurization step is preferably a step of performing pressurization at a temperature equal to or higher than a melting temperature of a resin, the melting temperature being determined by a 1/2 method using a flowtester CFT-500D (available from Shimadzu Corporation).

The present invention proposes the method for producing a fiber-reinforced plastic product, in which the second pressurization step is preferably a step in which pressurization is carried out at a temperature equal to or higher than {(the melting temperature of the resin, which is determined by 1/2 method using a flowtester CFT-500D (available from Shimadzu Corporation)) + 10°C}.

The present invention proposes the method for producing a fiber-reinforced plastic product, in which the second pressurization step is preferably a step in which pressurization is carried out at a temperature equal to or higher than {(the melting temperature of the resin, which is determined by 1/2 method using a flowtester CFT-500D (available from Shimadzu Corporation)) + 20°C}.

The present invention proposes the method for producing a fiber-reinforced plastic product, in which a heating method in the first pressurization step is preferably a non-contact heating method.

The present invention proposes the method for producing a fiber-reinforced plastic product, in which a heating method in the first pressurization step is preferably an induction heating method.

The present invention proposes the method for producing a fiber-reinforced plastic product, in which a heating method in the first pressurization step is preferably a high-frequency induction heating method.

The present invention proposes the method for producing a fiber-reinforced plastic product, in which a mold made of a non-magnetic material is used in the first pressurization step.

The present invention proposes the method for producing a fiber-reinforced plastic product, in which a mold made of a resin is preferably used in the first pressurization step.

The present invention proposes the method for producing a fiber-reinforced plastic product, in which a heating method in the second pressurization step is preferably a contact heating method.

The present invention proposes the method for producing a fiber-reinforced plastic product, in which heating in the second pressurization step is preferably achieved through heat transfer.

The present invention proposes the method for producing a fiber-reinforced plastic product, in which a mold made of a metal material is preferably used in the second pressurization step.

The present invention proposes the method for producing a fiber-reinforced plastic product, in which each of the fibers is preferably an electrically conductive fiber.

The present invention proposes the method for producing a fiber-reinforced plastic product, in which each of the fibers is preferably a carbon fiber.

The present invention proposes the method for producing a fiber-reinforced plastic product, in which the ratio of the fibers to the resin used in the additive manufacturing step is preferably such that (volume of the resin)/(volume of the fibers + volume of the resin) is 20/100 or more.

The present invention proposes the method for producing a fiber-reinforced plastic product, in which the ratio of the fibers to the resin used in the additive manufacturing step is preferably such that (volume of the resin)/(volume of the fibers + volume of the resin) is 25/100 or more.

The present invention proposes the method for producing a fiber-reinforced plastic product, in which the ratio of the fibers to the resin used in the additive manufacturing step is preferably such that (volume of the resin)/(volume of the fibers + volume of the resin) is 30/100 or more.

The present invention proposes the method for producing a fiber-reinforced plastic product, in which the ratio of the fibers to the resin used in the additive manufacturing step is preferably such that (volume of the resin)/(volume of the fibers + volume of the resin) is 35/100 or more.

The present invention proposes the method for producing a fiber-reinforced plastic product, in which the ratio of the fibers to the resin used in the additive manufacturing step is preferably such that (volume of the resin)/(volume of the fibers + volume of the resin) is 55/100 or less.

The present invention proposes the method for producing a fiber-reinforced plastic product, in which the ratio of the fibers to the resin used in the additive manufacturing step is preferably such that (volume of the resin)/(volume of the fibers + volume of the resin) is 50/100 or less.

The present invention proposes the method for producing a fiber-reinforced plastic product, in which the ratio of the fibers to the resin used in the additive manufacturing step is preferably such that (volume of the resin)/(volume of the fibers + volume of the resin) is 45/100 or less.

The present invention proposes the method for producing a fiber-reinforced plastic product, in which the ratio of the fibers to the resin used in the additive manufacturing step is preferably such that (volume of the resin)/(volume of the fibers + volume of the resin) is 40/100 or less.

The present invention proposes the method for producing a fiber-reinforced plastic product, in which a pressurizing mold used in the first pressurization step is preferably different from a pressurizing mold used in the second pressurization step.

The present invention proposes the method for producing a fiber-reinforced plastic product, in which the first pressurization step and the second pressurization step are preferably not continuous in time and are separated from each other.

The present invention proposes the method for producing a fiber-reinforced plastic product, in which a product obtained through the first pressurization step is preferably taken out from a pressurizing mold used in the first pressurization step and then disposed and pressurized in a pressurizing mold used in the second pressurization step.

The present invention proposes the method for producing a fiber-reinforced plastic product, in which a mold including at least a lower mold, a middle mold, and an upper mold is used in the first pressurization step, the lower mold includes a curved surface portion, the upper mold includes a curved surface portion, the curved surface portion of the upper mold corresponds to the curved surface portion of the lower mold, the middle mold includes a guide portion that guides a product obtained through the additive manufacturing step toward the lower mold, the middle mold is disposed with respect to the lower mold, a product obtained through the additive manufacturing step is disposed with respect to the middle guide portion, and the upper mold is disposed with respect to the product disposed with respect to the guide portion, and, pressure is applied between the lower mold and the upper mold, whereby a curved portion corresponding to the curved surface portion is formed on the product present between the curved surface portion of the lower mold and the curved surface portion of the upper mold.

The present invention proposes the method for producing a fiber-reinforced plastic product, in which a mold including at least a lower mold, a middle mold, and an upper mold is used in the first pressurization step, the lower mold includes a curved surface portion, the upper mold includes a curved surface portion, the curved surface portion of the upper mold corresponds to the curved surface portion of the lower mold, the middle mold includes a guide portion that guides a product obtained through the additive manufacturing step toward the lower mold, the middle mold includes an upper surface having a flat surface and a lower surface having a curved surface portion corresponding to the curved surface portion of the lower mold, the guide portion is a vacant space vertically provided in the middle mold, and the vacant space is connected to the curved surface portion of the lower mold, the middle mold is disposed with respect to the lower mold, the product obtained through the additive manufacturing step is disposed with respect to the middle guide portion, the upper mold is disposed with respect to the product disposed with respect to the guide portion, and pressure is applied between the lower mold and the upper mold, whereby a curved portion corresponding to the curved surface portion is formed on the product present between the curved surface portion of the lower mold and the curved surface portion of the upper mold.

The present invention proposes the method for producing a fiber-reinforced plastic product, in which a mold including at least a lower mold and an upper mold is preferably used in the second pressurization step, the upper mold and the lower mold include a cavity corresponding to a final product shape when the upper mold is disposed with respect to the lower mold, a product obtained through the first pressurization step is disposed on the lower mold, the upper mold is disposed from above the product disposed on the lower mold, and pressure is applied between the lower mold and the upper mold.

The present invention proposes the method for producing a fiber-reinforced plastic product, in which a mold including at least a lower mold and an upper mold is preferably used in the second pressurization step, the upper mold and the lower mold include a cavity corresponding to a final product shape when the upper mold is disposed with respect to the lower mold, the cavity is made up of a channel formed on the surface of the upper mold and a channel formed on the surface of the lower mold, the channel has a substantially U-shaped cross section, a product obtained through the first pressurization step is disposed on the lower mold, the upper mold is disposed from above the product disposed on the lower mold, and pressure is applied between the lower mold and the upper mold.

The present invention proposes the method for producing a fiber-reinforced plastic product, in which a product obtained through the additive manufacturing step preferably has a flat plate shape.

The present invention proposes the method for producing a fiber-reinforced plastic product, in which a product obtained through the additive manufacturing step preferably has a flat plate shape, and a product obtained through the first pressurization step has a three-dimensional shape.

### Advantageous Effects of Invention

Even if not all fibers were integrally bonded together by a resin in a product obtained through an additive manufacturing step, the product obtained through an additive manufacturing step was pressurized in two steps of a first pressurization step and a second pressurization step, and therefore a fiber-reinforced plastic product that is less likely to lose its shape and has a beautiful and three-dimensional shape was obtained.

The fiber-reinforced plastic product had excellent mechanical strength.

The present invention can be easily implemented.

### Brief Description of Drawings

FIG. 1 is a perspective view of a product A obtained through an additive manufacturing step.
FIG. 2 is an exploded perspective view of a mold used in a first pressurization step.
FIG. 3 is an exploded side view of the mold used in the first pressurization step.
FIG. 4 is an explanatory diagram in a state where a product A obtained through an additive manufacturing step is disposed on the mold used in the first pressurization step.
FIG. 5 is an explanatory diagram of the first pressurization step.
FIG. 6 is a perspective view of a product B obtained through the first pressurization step.
FIG. 7 is a perspective view of the product B obtained through the first pressurization step.
FIG. 8 is an explanatory diagram in a state where the product B obtained through the first pressurization step is disposed in a mold (lower mold) used in a second pressurization step.
FIG. 9 is a perspective view of a product C obtained through the second pressurization step.
FIG. 10 is a perspective view of the product C obtained through the second pressurization step.

### Description of Embodiments

Embodiments of the present invention will be described.

The present invention is a method for producing a fiber-reinforced plastic product. The present invention is a method for producing a fiber-reinforced plastic product having fibers and a resin. For example, the present invention is a method for producing a fiber-reinforced plastic product having a three-dimensional shape. The fibers each were, for example, an electrically conductive fiber. Examples of the electrically conductive fiber include a metal fiber and a carbon fiber. From the viewpoints of weight reduction and mechanical properties, a carbon fiber was preferable.

The production method includes an additive manufacturing step. The additive manufacturing step is a step of using an additive manufacturing technique. In the additive manufacturing step, for example, an additive manufacturing apparatus including a nozzle is used. In the step, a resin (plastic) and fibers are used. In the step, the resin (resin serving as a matrix) and the fibers may be supplied (emitted) from separate nozzles. Each material may be supplied (emitted) at the same time. Each material may be supplied (emitted) with a time difference. A fiber-reinforced plastic material (a material in which fibers are dispersed in a resin) may be supplied (emitted) from one nozzle. Through the above process, a fiber-reinforced plastic product having a desired shape was obtained. In the additive manufacturing step, for example, an additive manufacturing technique using a fused deposition modeling method may be used. In the additive manufacturing step, for example, there may including neither an application printing step in which, based on laminate region data in a predetermined cross section of a three-dimensional model, an unsolidified coagulant is applied and printed on an upper surface of a laminate or on a sheet surface bonded onto the laminate, nor a bonding step in which a sheet having the unsolidified coagulant applied is superimposed and bonded onto the laminate in a heat-retaining state are included, or there may be used an additive manufacturing technique not including an adhesion step in which a sheet having a surface to which a coagulant is selectively applied is layered one on another and the sheets are selectively bonded together with the coagulant, and there may be used an additive manufacturing technique using fibers and a resin to form a product. In the additive manufacturing step, for example, there may be used an additive manufacturing technique not including a step of laminating and bonding a sheet coated with a coagulant, and there may be used an additive manufacturing technique using fibers and a resin to form a product. The product obtained through the additive manufacturing step had a substantially flat plate shape. The product does not have a three-dimensional shape (a solid figure shape). A flat plate shape is not regarded as a solid figure shape. For example, flat plate shape is not a solid figure shape having a flat surface portion and an intersecting surface portion intersecting the flat surface portion. It has not been easy to obtain a product having the three-dimensional shape (solid figure shape) only through an additive manufacturing technique. It has been easy (relatively easy) to obtain a substantially flat plate-shaped product through an additive manufacturing technique. In the product obtained through the additive manufacturing step, not all of the fibers are integrally (firmly: rigidly) bonded together by the resin. The fibers are partially apart from each other in the product. The degree of bonding is merely an extent that the fibers are weakly connected to each other. The wording "apart from each other" means something like that the product (the product obtained through the additive manufacturing step) is not in one fixed shape. For example, it means something like that the fibers are misaligned when a force is applied to a product and thus the product is substantially arcuately bent. When all the fibers are integrally (strongly) bonded together by the resin, for example, even if the force as described above is applied to the product, the fibers are not misaligned. Of course, this is not a case where a force great enough to fracture the product is applied. Even if the force is small and not to fracture the product, when the force as described above is applied to the product, the fibers are easily misaligned. The wording "not integrally bonded" or "partially apart from each other" means the situation described above. When the content of the resin was low (the content of the fibers was high), it was difficult for all the fibers to be integrally bonded together by the resin. When the content of fibers (such as carbon fibers) was low, the mechanical strength of the resultant product was poor. When the content of fibers (such as carbon fibers) was great, the mechanical strength of the obtained product was excellent. The higher the content of carbon fibers, the heavier the resultant product. From such viewpoints, a preferable ratio between the resin and the fibers was as follows. The ratio is preferably such that (volume of the resin)/(volume of the fibers + volume of the resin) is 20/100 or more. The ratio is more preferably such that (volume of the resin)/(volume of the fibers + volume of the resin) is 25/100 or more. The ratio is further more preferably such that (volume of the resin)/(volume of the fibers + volume of the resin) is 30/100 or more. The ratio is still more preferably such that (volume of the resin)/(volume of the fibers + volume of the resin) is 35/100 or more. The ratio is preferably such that (volume of the resin)/(volume of the fibers + volume of the resin) is 55/100 or less. The ratio is more preferably such that (volume of the resin)/(volume of the fibers + volume of the resin) is 50/100 or less. The ratio is further more preferably such that (volume of the resin)/(volume of the fibers + volume of the resin) is 45/100 or less. The ratio is still more preferably such that (volume of the resin)/(volume of the fibers + volume of the resin) is 40/100 or less. There is a case where an object having substantially the same shape as the fiber-reinforced plastic product A is formed by a single (once) implementation of the additive manufacturing step. The product A may be a combination of portions A₁,..., Ak (k is an integer equal to or smaller than n),..., and An (n is an integer equal to or greater than 2). In such a case, the portion A1 is formed by a single (once) implementation of an additive manufacturing step A₁. Similarly, the portion Ak is formed by a single (once) implementation of an additive manufacturing step Ak. The portion An is formed by a single (once) implementation of an additive manufacturing step An. When the portions A₁,..., Ak,..., An respectively formed by the additive manufacturing steps A1,..., Ak,..., An are combined, the combination has the same shape as that of the product A. That is, there is a case where only a single (once) implementation of the additive manufacturing step is required and a case where two or more (twice or more times) implementations of the additive manufacturing step are required. Which case is adopted is determined by the content of the product A.

The production method includes a first pressurization step. The first pressurization step is a step of pressurizing a product obtained through the additive manufacturing step. Most of the fibers are integrally bonded together by the resin through the first pressurization step. That is, the fibers are somewhat firmly integrally bonded together by the resin. When the fibers are integrally bonded together by the resin, for example, even if the force as described above is applied to the product, the fibers are less likely to be misaligned. For example, even when the force as described above is applied to the product obtained through the first pressurization step, the product is less likely to be deformed. Of course, this is not a case where a force great enough to fracture the product is applied. In contrast, when a great force was applied to a product at a stage obtained through the additive manufacturing step, the fibers were misaligned and/or the product was deformed. The product obtained through the first pressurization step has a curved portion. Therefore, the shape of the product was a three-dimensional shape. In contrast, the product obtained through the additive manufacturing step has a flat plate shape. Therefore, at this stage, the product does not have a curved portion (a plane intersecting the plane). In the first pressurization step, a two-dimensional shaped product is formed into a three-dimensional shaped product. The fibers in the product obtained through the additive manufacturing step are not firmly integrated by the resin, and hence the product is likely to lose its shape when an excessively great force was applied in the first pressurization step. Therefore, it was preferable that an excessively great force should not be applied. That is, the force applied in the first pressurization step is smaller than the force applied to form a final product shape. The first pressurization step is a step of stacking and pressurizing a plurality of products obtained through the additive manufacturing step. Of course, there may a case where only one piece of the product is pressurized depending on the situation. In order to prevent loss of shape during deformation, multiple times (twice or more times) of pressurization may be implemented in the first pressurization step. Of course, a single pressurization may be implemented. The force applied in the first pressurization step may be increased stepwise (gradually). When the applied force is changed, it is preferable that, for example, the force applied first be small and the force applied later be great. When the force applied in the first pressurization step is changed from "small" to "great", the "great force" may be equal to the "force applied in the second pressurization step described later". In such a case, it is impossible to make a rigorous distinction between the first pressurization step and the second pressurization step. In the present invention (as used herein), the terms "first pressurization step" and "second pressurization step" are merely used for convenience. When the force applied in the "first pressurization step" changes, the "second pressurization step" should be considered to be included in the "first pressurization step" in some cases. That is, "a step in which the force in the first pressurization step is great" is considered the "second pressurization step". The "great force" in the step is a "force by which fibers in the product may be misaligned" when the "great force" is applied to the product obtained through the additive manufacturing step. In a case where such a force is applied, the step should be considered substantially as the second pressurization step even if it is formally the first pressurization step. The change in the force may be continuous (analog), or may be discontinuous (phased: stepwise: digital). In the foregoing description, the case where the force applied in the first pressurization step is changed from "small" to "great" has been described. However, the force applied in the first pressurization step may be changed from "small" to "smaller". Even in the case of such a change in force, the step is in a heated state, and thus the product obtained through the additive manufacturing step is compressed (e.g., reduced in thickness) even by a "smaller" force. In the case where multiple times (twice or more times) of pressurization are implemented in the first pressurization step, the magnitudes of the applied forces were different from each other in the foregoing description. However, the magnitudes of the applied forces may be the same as each other. In this case, it can be considered that there is an intermission between the time of first application and the time of second application in the first pressurization step.

The production method includes a second pressurization step. The second pressurization step is a step in which the product obtained through the first pressurization step is pressurized under heating. The force applied in the second pressurization step is greater than the force applied in the first pressurization step. The force applied in the second pressurization step is greater than the force applied at the initial stage of the first pressurization step. That is, the force applied in the second pressurization step is a force applied to form a final product shape. The volume of the product obtained through the second pressurization step is smaller than the volume of the product obtained through the first pressurization step. In the first pressurization step, the shape was changed from a two-dimensional shape (flat plate shape) to a three-dimensional shape (a solid figure shape). The shape was changed also in the second pressurization step. However, the shape change was a change into a substantially similar figure. It was thought, together with this, the product kept its shape even when a great force was applied. In the second pressurization step, a plurality of products obtained through the first pressurization step may be stacked and pressurized. There may a case where only single piece is pressurized depending on the situation.

As used herein (including the scope of claims), the phrase "the volume of the product obtained through the second pressurization step is smaller than the volume of the product obtained through the first pressurization step" should be construed as follows. When the volume of the product obtained through the first pressurization step is denoted by A1 and the volume of the product obtained through the second pressurization step is denoted by A2, a relationship: A2 < A1 holds. It is a matter of course that the relationship: A2 < A1 holds when (an object to be processed in the second pressurization step) is the same as (an object processed in the first pressurization step). However, there may be a case where a relationship: A2 > A1 holds when X (an object to be processed in the second pressurization step) is {Y (an object processed in the first pressurization step) + Z (an object not processed in the first pressurization step)}. However, even in such a case, the relationship: A2 < A1 holds when only the product obtained through the first pressurization step is taken into consideration, that is, when Z (the product not treated in the first pressurization step) is excluded. When a plurality of products obtained through the first pressurization step are stacked and the second pressurization step is performed, it should be construed as follows. The volume of one piece of the product obtained through the first pressurization step is denoted by A1, then the volume of n pieces of the products laid on top of another is n × A1. When the product having a volume (n × A1) is processed in the second pressurization step and then has a volume of A2, a relationship: A2 < n × A1 holds.

The pressure applied in the first pressurization step is lower than the pressure applied in the second pressurization step. For example, the ratio of (pressure applied in the first pressurization step)/(pressure applied in the second pressurization step) was equal to or less than 0.8. For example, the ratio was equal to or less than 0.7. For example, the ratio was equal to or less than 0.6. For example, the ratio was equal to or less than 0.5. For example, the ratio was equal to or less than 0.4. For example, the ratio was equal to or more than 0.02. For example, the ratio was equal to or more than 0.05. For example, the ratio was equal to or more than 0.1. The pressure applied in the first pressurization step was equal to or higher than 0.8 kPa. For example, the pressure applied in the first pressurization step was equal to or higher than 4 kPa. For example, the pressure applied in the first pressurization step was equal to or lower than 8.0 × 10⁵ kPa. For example, the pressure applied in the first pressurization step was equal to or lower than 4.0 × 10⁵ kPa. The pressure applied in the second pressurization step was equal to or higher than 1 kPa. For example, the pressure applied in the second pressurization step was equal to or higher than 5 kPa. For example, the pressure applied in the second pressurization step was equal to or lower than 1.0 × 10⁶ kPa. For example, the pressure applied in the second pressurization step was equal to or lower than 5.0 × 10⁵ kPa. The ratio satisfied a relationship: (volume of product obtained through the first pressurization step)/(volume of product obtained through the second pressurization step) ≤ 2.5. For example, the ratio was equal to or less than 2. For example, the ratio was equal to or less than 1.5. For example, the ratio was equal to or more than 1.05. For example, the ratio was equal to or more than 1.1.

In the additive manufacturing step, when the resin is a thermoplastic resin, the temperature is preferably equal to or higher than 30°C from the viewpoint of shapeability. The temperature was further more preferably equal to or higher than 50°C. The temperature was still more preferably equal to or higher than 100°C. There is no particular restriction on the upper limit of the temperature. However, in general, the temperature was preferably equal to or lower than 700°C. The temperature was more preferably equal to or lower than 500°C. The temperature was further more preferably equal to or lower than 450°C. The temperature was still more preferably equal to or lower than 400°C. When the resin was a thermosetting resin, the temperature was preferably equal to or higher than 0°C from the viewpoint of shapeability. The temperature was further more preferably equal to or higher than 10°C. The temperature was still further more preferably equal to or higher than 20°C. The temperature was still more preferably equal to or higher than 30°C. The temperature was preferably equal to or lower than 350°C. The temperature was further more preferably equal to or lower than 150°C. The temperature was still more preferably equal to or lower than 100°C.

The first pressurization step is preferably performed under heating conditions. This is because a resin (resin composition) becomes soft when the temperature is higher than normal temperature (room temperature: for example, 25°C). This is because, as a result, shapeability through pressurization was improved.

The heating temperature needed to satisfy the following conditions.

For example, the temperature was equal to or higher than the melting temperature in the 1/2 method performed using a flowtester CFT-500D (available from Shimadzu Corporation) in accordance with the manual accompanying the device.

The heating temperature was preferably equal to or higher than {the melting temperature + 10°C}. The heating temperature was further more preferably equal to or higher than {the melting temperature + 20°C}. The heating temperature was preferably equal to or lower than {the melting temperature + 60°C}. The heating temperature was further more preferably equal to or lower than {the melting temperature + 50°C}. The heating temperature was still more preferably equal to or lower than {the melting temperature + 40°C}. Even more preferably, the heating temperature was equal to or lower than {the melting temperature + 30°C}.

When the resin is a thermoplastic resin, the heating temperature needs to be, for example, a temperature higher than the melting temperature.

When the resin is a thermosetting resin, the heating temperature needs to be, for example, lower than the curing temperature.

The melting temperature is also referred to as softening point (softening temperature). The temperature was determined in the following manner. A constant test force extrusion type capillary rheometer (Flow characteristic evaluation device: Flowtester CFT-500D (available from Shimadzu Corporation)) was used, and the measurement was performed in accordance with the manual accompanying the device. In this device, the piston applies a constant load from the top of the measurement sample (The sample in this case is not a resin blended with fibers but a resin without fibers). The measurement sample filled in the cylinder is heated and melted. The melted measurement sample is extruded from a die provided at the bottom of the cylinder. A flow curve is created, showing the relationship between the descent stroke of the piston and the temperature. The melting temperature in the 1/2 method described in the manual was calculated as follows. The 1/2 of the difference between the descent stroke of the piston Smax at the time when the outflow is ended and the descent stroke of the piston Smin at the time when the outflow is started is obtained (this is defined as X. X = (Smax - Smin)/2). The temperature on the flow curve at the time point when the descent stroke of the piston becomes X in the flow curve is the melting temperature in the 1/2 method.

For example, when the resin was PA6 (thermoplastic resin), the melting temperature (softening temperature) determined by the above method was found to be about 225°C. When the resin was a polycarbonate resin (thermoplastic resin), the melting temperature (softening temperature) determined by the above method was found to be about 250°C. When the resin was a thermoplastic polyimide (thermoplastic resin), the melting temperature (softening temperature) determined by the above method was found to be about 388°C. When the resin was an epoxy resin (thermosetting resin), the melting temperature (softening temperature) determined by the above method was found to be about 70°C. When the resin was benzoxazine (thermosetting resin), the melting temperature (softening temperature) determined by the above method was found to be about 80°C. When the resin was a cyanate resin (thermosetting resin), the melting temperature (softening temperature) determined by the above method was found to be about 80°C.

The second pressurization step is preferably performed under heating conditions. This is because a resin (resin composition) becomes soft when the temperature is higher than normal temperature (room temperature: for example, 25°C). This is because, as a result, shapeability through pressurization was improved.

The heating temperature in the second pressurization step needed to satisfy the following conditions.

The heating temperature needs to be a temperature at which the resin is softer than at normal temperature (25°C). For example, the temperature is preferably equal to or higher than the melting temperature (softening temperature).

When the resin was a thermoplastic resin, the heating temperature was more preferably a temperature equal to or higher than {the melting temperature (softening temperature) + 10°C}. The heating temperature was still more preferably equal to or higher than {the melting temperature (softening temperature) + 20°C}. The heating temperature was even more preferably equal to or higher than {the melting temperature (softening temperature) + 30°C}. The heating temperature was preferably a temperature equal to or lower than {the melting temperature (softening temperature) + 100°C}. The heating temperature was further more preferably equal to or lower than {the melting temperature (softening temperature) + 90°C}. The heating temperature was still more preferably equal to or lower than {the melting temperature (softening temperature) + 80°C}. The heating temperature was even more preferably equal to or lower than {the melting temperature (softening temperature) + 70°C}.

When the resin was a thermosetting resin, the heating temperature was preferably a temperature equal to or higher than (the curing temperature of resin - 70°C). The heating temperature was more preferably a temperature equal to or higher than (the curing temperature of resin - 60°C). The heating temperature was further more preferably a temperature equal to or higher than (the curing temperature of resin - 50°C). The heating temperature was still further more preferably a temperature equal to or higher than (the curing temperature of the resin - 40°C). The heating temperature was preferably a temperature equal to or lower than (curing temperature of resin + 20°C). The heating temperature was further more preferably a temperature equal to or lower than (curing temperature of resin + 10°C). The heating temperature was still more preferably a temperature equal to or lower than the curing temperature of the resin. The curing temperature is a peak temperature in the DSC curve.

The heat curing temperature of the epoxy resin (thermosetting resin) is about from 120 to 180°C. The heat curing temperature of the benzoxazine resin (thermosetting resin) is about from 120 to 200°C. The heat curing temperature of the cyanate resin (thermosetting resin) is about from 150 to 250°C.

When the resin is a thermosetting resin, after-curing may be performed.

The heating method in the first pressurization step was a non-contact heating method. The heating method was an induction heating method. The heating method was a high-frequency induction heating method. In the first pressurization step, for example, a mold made of non-magnetic material was used. For example, a mold made of resin was used. A non-magnetic material such as glass beads or glass fibers may be partially used in the mold. A metal material may be partially used in the mold.

The heating method in the second pressurization step was a contact heating method. For example, heat is applied through the process of heat transfer. In the second pressurization step, a mold made of a metal material was used. A non-metal material may be partially used in the mold. The pressure applied in the second pressurization step is larger than the pressure applied in the first pressurization step. Accordingly, a mold made of metal was preferably used in the second pressurization step. The reason is as follows. The pressure applied in the second pressurization step is higher than the pressure applied in the first pressurization step. This is because the metal material was more excellent in pressure resistance than the resin material. The second pressurization step may be a forming method in which a resin burr occurs. The pressurization method in the second pressurization step is not particularly limited. Examples thereof include a press molding method, an injection molding method, a transfer molding method, and an autoclave molding method. In the second pressurization step, the product obtained in the first pressurization step and a second material (a product or material not underwent the first pressurization step) may be integrally molded. The second material is not particularly limited. Examples thereof include injection molding materials, prepreg materials, sheet materials, film materials, and resin materials. The reinforcing fiber is not required to be contained.

The pressurizing mold used in the first pressurization step was different from the pressurizing mold used in the second pressurization step.

The product obtained through the first pressurization step was taken out from the pressurizing mold used in the first pressurization step, and disposed and pressurized in the pressurizing mold used in the second pressurization step.

In the first pressurization step, for example, a mold including a lower mold, a middle mold, and an upper mold was used. The lower mold includes a curved surface portion. The upper mold includes a curved surface portion. The curved surface portion of the upper mold corresponds to the curved surface portion of the lower mold. The middle mold includes a guide portion that guides the product obtained through the additive manufacturing step toward the lower mold. The middle mold was disposed with respect to the lower mold. The product obtained through the additive manufacturing step was disposed with respect to the guide portion of the middle mold. The upper mold is disposed with respect to the product disposed with respect to the guide portion. Pressure was applied between the lower mold and the upper mold and thereby a curved portion corresponding to the curved surface portion was formed on the product present between the curved surface portion of the lower mold and the curved surface portion of the upper mold.

The middle mold includes, for example, an upper surface having a flat surface and a lower surface having a curved surface portion corresponding to the curved surface portion of the lower mold. The guide portion is a vacant space vertically provided in the middle mold. The vacant space is connected to the curved surface portion of the lower mold. The middle mold was disposed with respect to the lower mold, the product obtained through the additive manufacturing step was disposed with respect to the guide portion of the middle mold, the upper mold was disposed with respect to the product disposed with respect to the guide portion, and a pressure was applied between the lower mold and the upper mold and thereby a curved portion corresponding to the curved surface portion was formed on the product present between the curved surface portion of the lower mold and the curved surface portion of the upper mold.

In the second pressurization step, for example, a mold including a lower mold and an upper mold was used. The upper mold and the lower mold include a cavity corresponding to a final product shape when the upper mold is disposed with respect to the lower mold. The cavity is made up of a channel formed on a lower surface of the upper mold and a channel formed on an upper surface of the lower mold. Therefore, when the product obtained through the first pressurization step is disposed on the channel of the lower mold, a part of the product protrudes from the surface of the lower mold. The channel surface is free of corners. The product obtained through the first pressurization step was disposed on the channel of the lower mold, the upper mold was disposed on the product disposed on the lower mold, and pressure was applied between the lower mold and the upper mold. The product thus obtained is free of corners, since the channel faces are free of corners. When the cavity is made up only of the channel formed on the upper surface of the lower mold, the product obtained in this manner has a corner even if the channel is free of corners.

The resin (plastic) used in the present invention is any resin as long as it is a resin (matrix resin) that can be used in additive manufacturing techniques. A thermoplastic resin is used. A thermosetting resin is used. Either one of them may be used. They may be used in combination. One type or two or more types of the resin may be used. The form of the resin may be a film form (or a sheet form). The form of the resin may be fibrous (yarns or filaments). When the resin is fibrous, it is a so-called mixed fiber yarn in the present invention (See, e.g., WO2016/167136A1). In the case of a mixed fiber yarn, the technique disclosed in WO2016/167136A1 can be adopted. The resin preferably has a functional group (reactive group: polar group). A resin having no functional groups (reactive group: polar group) can also be used.

The thermoplastic resin is composed only of a thermoplastic resin in some cases, and the thermoplastic resin is mainly composed of a thermoplastic resin in other cases. In the present invention, any case may be adopted. In the present invention (as used herein), unless otherwise specified, the term "thermoplastic resin" includes both the case in which the resin is composed only of a thermoplastic resin, and the case in which the resin contains a thermoplastic resin as a main component. The case in which the resin contains a thermoplastic resin as a main component means that the content of thermoplastic resin is 50 mass% or more. The content thereof is preferably 80 mass% or more. The content thereof is further more preferably 90 mass% or more.

The thermosetting resin is composed only of a thermosetting resin in some cases, and the thermosetting resin is mainly composed of a thermosetting resin in other cases. In the present invention, any case may be adopted. In the present invention (as used herein), unless otherwise specified, the term "thermosetting resin" includes both the case in which the resin is composed only of a thermosetting resin, and the case in which the resin contains a thermosetting resin as a main component. The case in which the resin contains a thermosetting resin as a main component means that the content of thermosetting resin is 50 mass% or more. The content thereof is preferably 80 mass% or more. The content thereof is further more preferably 90 mass% or more.

Examples of the thermosetting resin include epoxy resins, vinyl ester resins, unsaturated polyester resins, diallyl phthalate resins, phenolic resins, maleimide resins, cyanate resins, benzoxazine resins, and dicyclopentadiene resins.

Examples of thermoplastic resins include polyolefin resins, polystyrene resins, thermoplastic polyamide resins, polyester resins, polyacetal resins (polyoxymethylene resins), polycarbonate resins, (meth)acrylic resins, polyarylate resins, polyphenylene ether resins, polyimide resins, polyether nitrile resins, phenoxy resins, polyphenylene sulfide resins, polysulfone resins, polyketone resins, polyetherketone resins, thermoplastic urethane resins, fluorine-based resins, and thermoplastic polybenzimidazole resins.

Examples of the polyolefin resin include polyethylene resins, polypropylene resins, polybutadiene resins, polymethylpentene resins, vinyl chloride resins, vinylidene chloride resins, vinyl acetate resins, and polyvinyl alcohol resins.

Examples of the polystyrene resin include polystyrene resins, acrylonitrile-styrene resins (AS resins), and acrylonitrile-butadiene-styrene resins (ABS resins).

Examples of the polyamide resin include polyamide 6 resin (nylon 6), polyamide 11 resin (nylon 11), polyamide 12 resin (nylon 12), polyamide 46 resin (nylon 46), polyamide 66 resin (nylon 66), and polyamide 610 resin (nylon 610). Examples of nylon (hereinafter, sometimes abbreviated as "PA") which is one of the polyamide-based resins include PA6(also referred to as polycaproamide, polycaprolactam, poly(ε-caprolactam), PA26 (polyethylene adipamide), PA46 (polytetramethylene adipamide), PA66 (polyhexamethylene adipamide), PA69 (polyhexamethylene azepamide), PA610 (polyhexamethylene sebacamide), PA611 (polyhexamethylene undecamide), PA612 (polyhexamethylene dodecamide), PA11 (polyundecamide), PA12 (polydodecanamide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephthalate), PA12I (polydodecamethylene isophthalamide), polyamide XD6 (polymetaxylylene adipamide), and polyamide XD10 (polyxylylene sebacamide).

Examples of the polyester resin include polyethylene terephthalate resin, polyethylene naphthalate resin, polybutylene terephthalate resin, polytrimethylene terephthalate resin, and liquid crystal polyester.

Examples of the (meth)acrylic resin include polymethyl methacrylate.

Examples of the modified polyphenylene ether resin include modified polyphenylene ether.

Examples of the thermoplastic polyimide resin include thermoplastic polyimide, polyamide-imide resin, and polyetherimide resin.

Examples of the polysulfone resin include modified polysulfone resin, and polyether sulfone resin.

Examples of the polyetherketone resin include polyether ketone resin, polyether ether ketone resin, and polyether ketone ketone resin.

Examples of the fluorine-based resin include polytetrafluoroethylene.

Examples of the fibers in the fiber-reinforced resin include inorganic fibers. Organic fibers may be used. A combination of both organic and inorganic fibers may also be used. The fibers are particularly preferably continuous reinforcing fibers having a fiber length of greater than 30 mm. The average fiber length of the continuous reinforcing fibers used in the present invention is not particularly limited, but from the viewpoints of achieving excellent forming processability, the fibers having an average fiber length of from 0.05 to 20000 m was preferable. The average fiber length was more preferably from 100 to 10000 m. The average fiber length was further more preferably from 1000 to 7000 m. The fibers may be a combination of fibers having a fiber length more than 30 mm and fibers having a fiber length equal to or less than 30 mm. Unless otherwise stated, the length of the fibers in the present invention is the weight average fiber length. The average fiber diameter of the fibers was preferably 3 µm or more. The average fiber diameter was more preferably 4 µm or more. The average fiber diameter was further more preferably 5 µm or more. The average fiber diameter was preferably equal to or less than 50 µm. The average fiber diameter was more preferably equal to or less than 20 µm. The average fiber diameter was further more preferably equal to or less than 12 µm. The average fiber diameter is a diameter of a single yarn.

Examples of the inorganic fibers include carbon fibers, silicon carbide fibers, alumina fibers, boron fibers, glass fibers, and metal fibers. However, the inorganic fibers are not limited thereto.

Examples of the carbon fibers include polyacrylonitrile (PAN)-based carbon fibers, petroleum/coal pitch-based carbon fibers, rayon-based carbon fibers, cellulose-based carbon fibers, lignin-based carbon fibers, phenol-based carbon fibers, and vapor-grown carbon fibers. One type or two or more types among these are appropriately used. The carbon fibers used preferably had a tensile modulus of from 100 GPa to 1000 GPa. The form of the carbon fibers is not particularly limited. The form of the carbon fibers may be continuous fibers or discontinuous fibers. Examples of the continuous fibers include fibers in which carbon fibers are arranged in one direction (unidirectional material). In case of using discontinuous fibers, examples of the discontinuous fibers include a material in which carbon fibers are arranged in a resin so as to be oriented in a specific direction, a material in which carbon fibers are arranged in a resin so as to be randomly dispersed in an in-plane direction. The carbon fiber may be a single fiber, a fiber bundle, or a mixture of both. In general, the carbon fibers are a fiber bundle in which thousands to tens of thousands of filaments are assembled. When a carbon fiber bundle is used as the carbon fibers, if the carbon fiber bundle is used as it is, the entangled portion of the fiber bundle becomes locally thick, and a carbon fiber-reinforced resin processed article with a thin-walled end face is difficult to obtain some cases. Therefore, when a carbon fiber bundle is used as the carbon fiber, the carbon fiber bundle is preferably widened and used, or opened and used.

Examples of the metal fibers include A1 fibers, Au fibers, Ag fibers, Fe fibers, and stainless-steel fibers.

Examples of the organic fibers include aramid fibers, aromatic polyamide fibers, cellulose fibers, polyethylene fibers, and poly(paraphenylene benzobisoxazole) fibers (Zylon (available from Toyobo Co., Ltd.)).

The fibers may be treated with a treatment agent. Examples of the treatment agent include a sizing agent. Another example is a surface treatment agent. Examples thereof include the treatment agents disclosed in JP 4894982 B. It is advantageous when the treatment agent on the fiber surface reacts with the functional group (reactive group: polar group) of the resin.

The treatment agent is selected from the group consisting of, for example, epoxy resins, urethane resins, silane coupling agents, water-insoluble polyamide resins, and water-soluble polyamide resins. The treatment agent is preferably selected from the group consisting of epoxy resins, urethane resins, water-insoluble polyamide resins, and water-soluble polyamide resins. One type or two or more types of the treatment agent may be used.

Examples of the epoxy resin include a glycidyl compound (e.g., epoxy alkane, alkane diepoxide, bisphenol A-glycidyl ether, dimer of bisphenol A-glycidyl ether, trimer of bisphenol A-glycidyl ether, oligomer of bisphenol A-glycidyl ether, polymer of bisphenol A-glycidyl ether, bisphenol F-glycidyl ether, dimer of bisphenol F-glycidyl ether, trimer of bisphenol F-glycidyl ether, oligomer of bisphenol F-glycidyl ether, polymer of bisphenol F-glycidyl ether, stearyl glycidyl ether, phenyl glycidyl ether, ethylene oxide lauryl alcohol glycidyl ether, ethylene glycol diglycidyl ether, polyethylene glycol diglycidyl ether, propylene glycol diglycidyl ether, etc.), glycidyl ester compounds (e.g., benzoic acid glycidyl ester, p-toluic acid glycidyl ester, stearic acid glycidyl ester, lauric acid glycidyl ester, palmitic acid glycidyl ester, oleic acid glycidyl ester, linoleic acid glycidyl ester, linolenic acid glycidyl ester, phthalic acid diglycidyl ester, etc.), and glycidylamine compounds (e.g., tetraglycidyl aminodiphenylmethane, triglycidyl aminophenol, diglycidyl aniline, diglycidyl toluidine, tetraglycidyl meta-xylenediamine, triglycidyl cyanurate, triglycidyl isocyanurate, etc.).

Examples of the urethane resin include polyols, polyols obtained through transesterification (Umesterung) of a fat and a polyhydric alcohol, and urethane resins obtained through reacting a polyisocyanate with a compound having an OH group.

Examples of the polyisocyanate include aliphatic isocyanates (e.g., 1,4-tetramethylene diisocyanate, 1,6-hexamethylene diisocyanate, 2,2,4-trimethylhexamethylene diisocyanate, 2,8-diisocyanate methyl caproate, etc.), alicyclic diisocyanates (e.g., 3-isocyanatomethyl-3,5,5-trimethylcyclohexyl isocyanate, methylcyclohexyl-2,4-diisocyanate, etc.), aromatic diisocyanates (e.g., toluylene diisocyanate, diphenylmethane diisocyanate, 1,5-naphthene diisocyanate, diphenylmethylmethane diisocyanate, tetraalkyldiphenylmethane diisocyanate, 4,4-dibenzyl diisocyanate, 1,3-phenylene diisocyanate, etc.), and halogenated diisocyanates (e.g., chlorinated diisocyanates and brominated diisocyanates). One type or two or more types of the polyisocyanate may be used.

Examples of the polyol include polyols usually used for production of urethane resins. Examples thereof include diethylene glycol, butanediol, hexanediol, neopentyl glycol, bisphenol A, cyclohexanedimethanol, trimethylolpropane, glycerin, pentaerythritol, polyethylene glycol, polypropylene glycol, polyester polyol, polycaprolactone, polytetramethylene ether glycol, polythioether polyol, polyacetal polyol, polybutadiene polyol, and furandimethanol. One type or two or more types of the polyol may be used.

Examples of the silane coupling agent include trialkoxy or triallyloxysilane compounds (e.g., aminopropyltriethoxysilane, phenylaminopropyltrimethoxysilane, glycidylpropyltriethoxysilane, methacryloxypropyltrimethoxysilane, vinyltriethoxysilane, and the like), ureidosilane, sulfidosilane, vinylsilane, and imidazolesilane. One type or two or more types of the silane coupling agent may be used.

Hereinafter, the present invention will be specifically described. The following examples are merely examples of the present invention. The present invention is not limited to the following Examples. In other words, variations and application examples in which the merits of the present invention are not greatly impaired are also included in the present invention.

### [Example 1]

A thermosetting resin (benzoxazine resin: available from Aica Kogyo Company, Limited) was used. Carbon fibers (available from Mitsubishi Rayon Co., Ltd. Pyrofil-TR-50S-12000-AD, 8000 dtex, number of fibers: 12000f) were used. The blending ratio was set such that 40 parts by volume of the resin and 60 parts by volume of the carbon fibers.

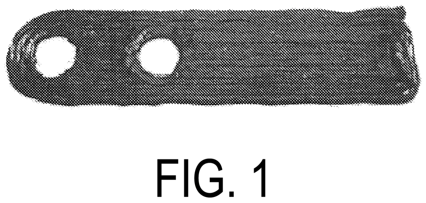

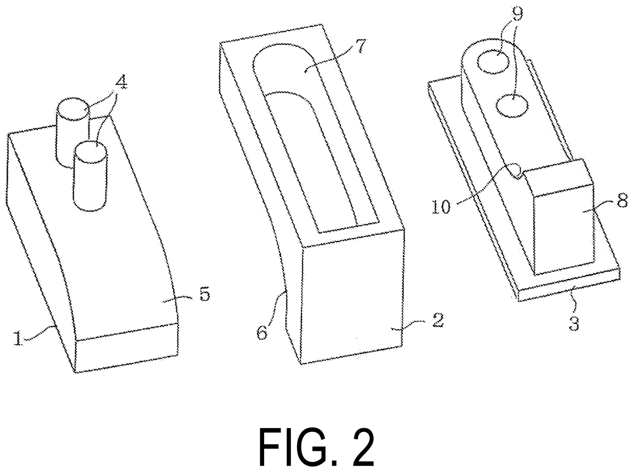

A 3D printer (K 8200 available from Velleman) was used. Additive manufacturing technique was implemented (Nozzle temperature; 135°C, stage temperature; 50°C). Thereby, a product A made of the composition was obtained. The product A obtained through the additive manufacturing step is as can be seen in FIGS. 1 and 2. The product A has a substantially flat plate shape. The product A does not have a three-dimensional shape (a solid figure shape). The product A had a relatively low content of resin so that not all of the fibers were firmly integrated by the resin.

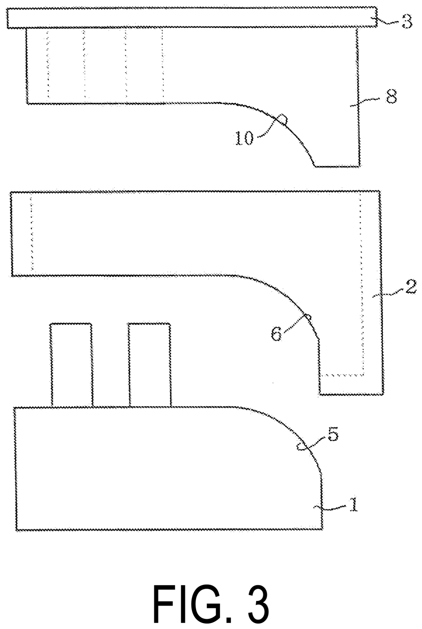

The product A obtained through the additive manufacturing step illustrated in FIG. 1 was disposed in the mold illustrated in FIGS. 2 to 5. The mold illustrated in FIGS. 2 to 5 is a mold used in the first pressurization step.

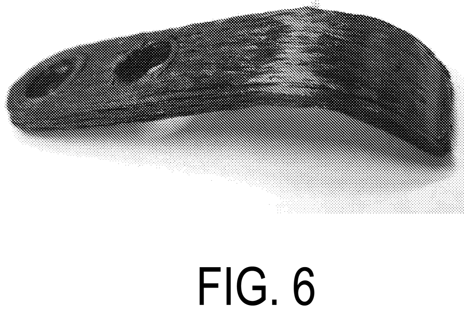

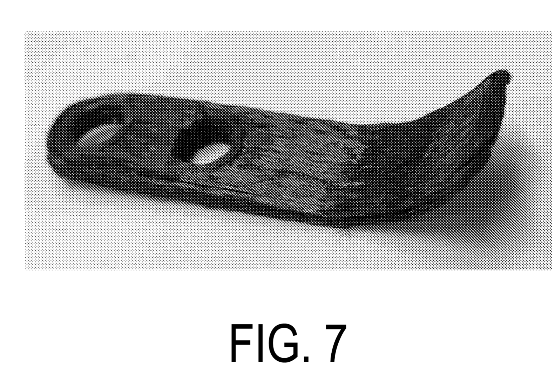

In FIGS. 2, 3, 4 and 5, reference numeral 1 denotes a lower mold. Reference numeral 2 denotes a middle mold. Reference numeral 3 denotes an upper mold. The mold used in the first pressurization step is made up of a lower mold 1, a middle mold 2, and an upper mold 3. The lower mold 1, the middle mold 2, and the upper mold 3 each are made of a non-magnetic material (non-metal material) such as a resin. The lower mold 1 includes a cylindrical portion 4 for guiding. The cylindrical portion 4 is provided in accordance with the shape of a target product. The lower mold 1 includes a protrusion or a recess (not illustrated) for positioning of the middle mold 2 as needed. The upper surface portion of the lower mold 1 includes a curved surface portion 5. The middle mold 2 includes a protrusion (not illustrated) which fits into the recess mentioned above or a recess (not illustrated) into which the protrusion mentioned above fits as needed. The lower surface portion of the middle mold 2 includes a curved surface portion 6 that comes into surface contact with the curved surface portion 5 when the middle mold 2 is disposed with respect to the lower mold 1. The middle mold 2 includes a vacant space 7 into which the cylindrical portion 4 fits when the middle mold 2 is disposed with respect to the lower mold 1. The vacant space 7 also presents in upper positions of the curved surface portions 5 and 6. The vacant space 7 may be connected to the end face of the middle mold 2. When the middle mold 2 is disposed with respect to the lower mold 1, the lower surface of the middle mold 2 comes into surface contact with the upper surface of the lower mold 1. The upper surface of the middle mold 2 is a flat surface. The upper mold 3 has a structure capable of disposing the upper mold 3 with respect to the middle mold 2 in a state in which the product A obtained through the additive manufacturing step is disposed at a predetermined position in the middle mold 2 disposed on the lower mold 1. The upper mold 3 includes a vertical wall 8. The vertical wall 8 includes a recess 9 into which the cylindrical portion 4 can be fitted. The cross-sectional outer shape of the vertical wall 8 on a horizontal plane is substantially the same as the cross-sectional inner shape of the vacant space 7 on the horizontal plane. When the upper mold 3 is disposed with respect to the middle mold 2, the vertical wall 8 is fitted into the vacant space 7. When the upper mold 3 is disposed with respect to the middle mold 2, the lower end face of the vertical wall 8 includes a curved surface portion 10 that is in surface contact with the curved surface portion 6. The lower mold 1, the middle mold 2, and the upper mold 3 are configured such that a space (cavity) existing inside the lower mold 1, the middle mold 2, and the upper mold 3 when they are combined corresponds to a shape of a target product B (products of FIGS. 6 and 7 in the case of the present example).

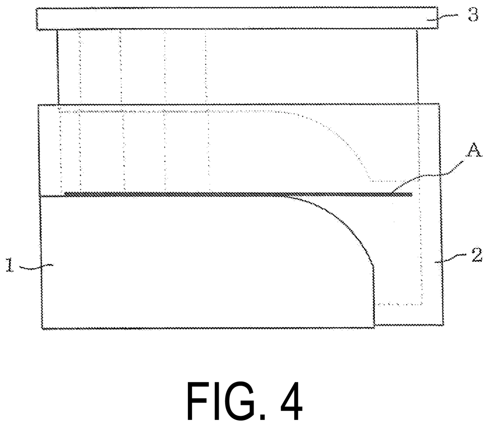

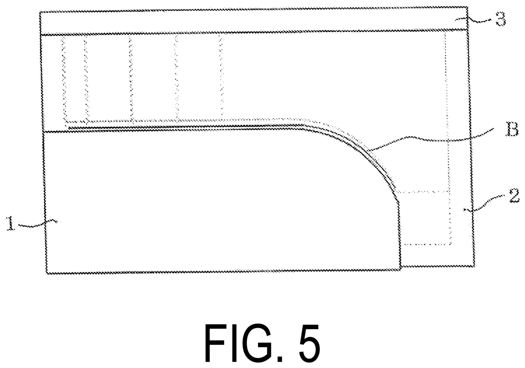

The middle mold 2 was disposed with respect to the lower mold 1. The product A (three pieces) obtained through the additive manufacturing step was disposed at the position of the vacant space 7 in the middle mold 1. The upper mold 3 was disposed with respect to the product A disposed with respect to the position in the vacant space 7. The vertical wall 8 of the upper mold 3 was pushed into the vacant space 7 in the middle mold 1 (see FIGS. 4 and 5). The pressure was 1500 kPa. The middle mold 2 may be called a guide mold. The middle mold 2 functions as a guide that restricts the position of the product A (i.e., a product obtained through the additive manufacturing step, in the first pressurization step) illustrated in FIG. 1. The middle mold 2 plays a role of regulating the position of the product A when the vertical wall 8 of the upper mold 3 is pushed into the vacant space 7 in the middle mold 1. A high-frequency induction heating device was used. The product A including carbon fibers obtained through the additive manufacturing step was heated to a temperature ranging from 80 to 100°C. Since the lower mold 1, the middle mold 2, and the upper mold 3 each are made of a resin, heat generation does not occur. That is, the mold is not hot even when touched with bare hands. A curved portion was formed on the product A having a flat plate shape sandwiched between the curved surface portion 5 and the curved surface portion 10 (see FIG. 5). The product A obtained through the additive manufacturing step was compressed by the pressing force. The pressure was held for a time period ranging from 5 to 10 seconds until the product A was cooled. As a result, unlike the product A obtained through the additive manufacturing step, most of the fibers were integrally bonded together by the resin (see FIGS. 6 and 7). That is, the product B illustrated in FIGS. 6 and 7 kept its shape even if a little force is applied.

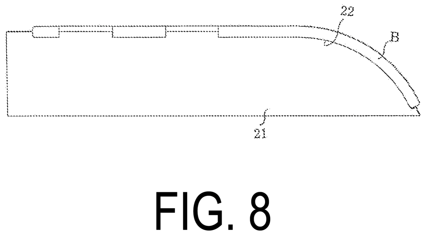

FIG. 8 is an explanatory diagram of a mold used in the second pressurization step.

Reference numeral 21 denotes a lower mold made of metal. The lower mold 21 has a curved surface portion. A channel 22 having a shape conforming to the shape of the lower half body of a product obtained through the second pressurization step described below is formed on the surface of the lower mold 21. The cross-sectional shape of the channel 22 is substantially U-shaped. That is, there are no corners on the surface of the channel 22. The mold used in the second pressurization step has an upper mold made of metal similar to the lower mold 21. That is, a forming mold is made up of the lower mold 21 and the upper mold. The upper mold also has a curved surface portion similar to the curved surface portion mentioned above. A channel similar to the channel 22 is formed on the surface of the upper mold. The cross-sectional shape of the channel is also substantially U-shaped.

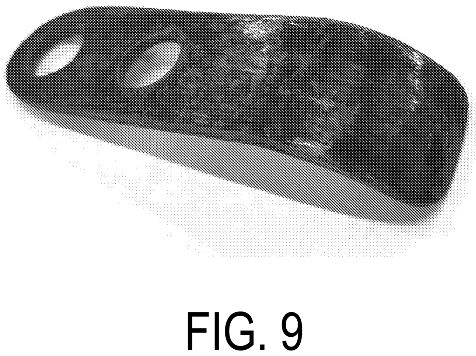

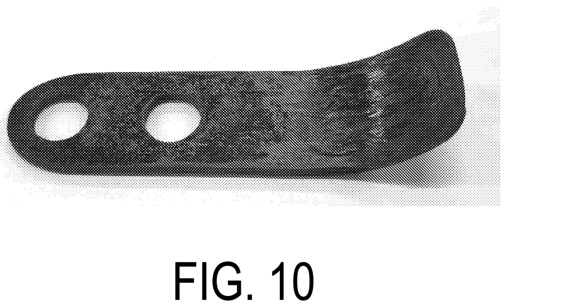

The product B (a product obtained through the first pressurization step) illustrated in FIGS. 6 and 7 was disposed on the channel 22 of the lower mold 21 illustrated in FIG. 8 (see FIG. 8). Thereafter, the corresponding upper mold was disposed, and heating (180°C) and pressurization (60000 kPa) were performed. A target final product C (see FIGS. 9, 10) was obtained.

### [Comparative Example 1]

The same procedure as in Example 1 was carried out except that the first pressurization step was omitted. That is, the products (3 pieces) obtained through the additive manufacturing step illustrated in FIG. 1 were disposed in the channels of the mold illustrated in FIG. 8, and were heated (180°C) and pressurized (60000 kPa).

The product thus obtained lost its shape. A product similar to the final product C obtained in Example 1 was not obtained.

From this, the importance of the first pressurization step can be understood.

That is, the product obtained through the additive manufacturing step had a state in which the carbon fibers were not integrally bonded together by the resin, and the carbon fibers were partially apart from each other. Even when the product obtained through the additive manufacturing step is disposed on the channel 22 in the lower mold 21 illustrated in FIG. 8, a part of the product is not accommodated in the channel 22. When a great force was applied, carbon fibers were misaligned in the product, and an intended product was not obtained.

### [Comparative Example 2]

In Example 1, the ratio was set such that the resin : carbon fibers = 60 parts by volume : 40 parts by volume. That is, the same procedure as in Example 1 was carried out except that the ratio of the resin was increased.

The final product obtained in Comparative Example 2 kept its shape as in Example 1. When the ratio of the resin was increased so that the carbon fibers were integrally bonded together by the resin in the product obtained through the additive manufacturing step, the final product kept its shape, unlike Comparative Example 1.

However, the product of Comparative Example 2 was poorer in mechanical strength than the product of Example 1.

### [Comparative Example 3]

In Comparative Example 1, the ratio was set such that the resin : carbon fibers = 60 parts by volume : 40 parts by volume. That is, the procedure same as in Comparative Example 1 was carried out except that the content of the resin was increased.

The final product obtained in Comparative Example 3 kept its shape, as in Example 1 and Comparative Example 2. When the ratio of the resin was increased so that carbon fibers were integrally bonded together by the resin in the product obtained through the additive manufacturing step, the final product kept its shape even if the first pressurization step was omitted, and loss of shape as in the case of Comparative Example 1 was not occurred.

However, the product of Comparative Example 3 was poorer in mechanical strength than the product of Example 1.

### [Comparative Example 4]

The same procedure as in Example 1 was carried out except that the second pressurization step was omitted.

The product obtained in Comparative Example 4 is the product shown in FIGS. 6 and 7. The product was poor in appearance. The product was also poor in mechanical strength. The reason why the mechanical strength was poor was believed to be the following reason. When enough pressure is not applied, voids (air bubbles) are formed inside the product. The occurrence of the voids is thought to be due to the fibers. The degree of improvement in the mechanical strength of the product was low, which was thought to be due to the presence of the voids. It was thought that the voids were reduced (or disappeared), and the mechanical strength was improved when enough pressurization (especially, heating and pressurization) was implemented in the second pressurization step.

It was thought that there would be no problem if enough pressurization was implemented in the first pressurization step, but the resin was not cured, and hence a problem of loss of shape occurred in this case when the resin was heated to a temperature equal to or higher than the melting temperature of the resin, which was determined by the 1/2 method using a flowtester CFT-500D (available from Shimadzu Corporation).

### [Comparative Example 5]

The same procedure as in Example 1 was carried out except that carbon fibers were not used.

The product obtained in Comparative Example 5 was poor in mechanical strength.

### [Example 2]

A thermoplastic resin (Lexter8500: available from Mitsubishi Gas Chemical Company, Inc.) was used. Carbon fibers (Pyrofil-TR-50S-12000-AD, 8000 dtex, number of fibers: 12000f, available from Mitsubishi Rayon Co., Ltd.) were used. The blending ratio was set such that 50 parts by volume of the resin and 50 parts by volume of the carbon fibers. The 3D printer used in Example 2 was K8200 (Nozzle temperature: 220°C, stage temperature: 50°C) available from Velleman. The temperature in the first pressurization step was in a range of from 210 to 270°C, and the pressure was 1500 kPa. The temperature in the second pressurization step was 230°C, and the pressure was 60000 kPa. The other procedures were carried out in accordance with Example 1.

The product thus obtained was excellent as that in Example 1.

### [Comparative Example 6]

The same procedure as in Example 2 was carried out except that the first pressurization step was omitted.

The results were similar to those of Comparative Example 1.

### [Comparative Example 7]

In Example 2, the ratio was set such that the resin : carbon fibers = 60 parts by volume : 40 parts by volume.

The results were similar to those of Comparative Example 2. That is, the mechanical strength was poor.

### [Comparative Example 8]

In Comparative Example 6, the ratio was set such that the resin : carbon fibers = 60 parts by volume : 40 parts by volume. That is, the same procedure as in Comparative Example 6 was carried out except that the content of the resin was increased.

The final product obtained in Comparative Example 8 kept its shape. However, the product of Comparative Example 8 was poorer in mechanical strength than the product of Example 2.

### [Comparative Example 9]

The same procedure as in Example 2 was carried out except that the second pressurization step was omitted.

The product obtained in Comparative Example 9 is a product as shown in FIGS. 6 and 7. The product was poor in appearance. The product was also poor in mechanical strength. It was thought that there would be no problem if enough pressurization was implemented in the first pressurization step, but the problem of loss of shape occurred in this case.

### [Comparative Example 10]

The same procedure as in Example 2 was carried out except that the carbon fibers were not used.

The product obtained in Comparative Example 10 was poor in mechanical strength.

### [Example 3]

PEEK (Victrex (registered trademark) available from Victrex: a thermoplastic resin) was used. The Pyrofil-TR-50S-12000-AD was used. The blending ratio was set such that 30 parts by volume of the resin and 70 parts by volume of the carbon fibers. Then, the same procedure as in Example 1 was carried out.

### [Example 4]

A sheet of TORAYCA prepreg P3252S-25 (a thermosetting resin available from Toray Industries, Inc.: an epoxy resin) and carbon fibers (T700SC), in the ratio such that the resin : the carbon fibers = 40 parts by volume : 60 parts by volume, was subjected to slitting (width: 0.8 mm). The sheet was processed into a roll having a circular section with a diameter of 0.5 mm. This processed product (material) was used in the same manner as in Example 1. The 3D printer used in Example 4 was K8200 (Nozzle temperature; 60°C, stage temperature; 10°C) available from Velleman. The temperature was 80°C and the pressure was 500 kPa in the first pressurization step. The temperature was 130°C and the pressure was 2000 kPa in the second pressurization step.

The product thus obtained was excellent as that in Example 1. This product kept its shape and also excellent in mechanical strength.

### Reference Signs List

1 Lower mold
2 Middle mold
3 Upper mold
4 Cylindrical portion
5, 6, 10 Curved surface portion
7 Vacant space
8 Vertical wall
9 Recess
21 Lower mold
22 Channel
A Product obtained through additive manufacturing step
B Product obtained through first pressurization step
C Product obtained through second pressurization step

## Claims

1. A method for producing a fiber-reinforced plastic product comprising fibers and a resin,
the method comprising an additive manufacturing step, a first pressurization step and a second pressurization step,
wherein the second pressurization step is a step of pressurizing, under heating, a product obtained through the first pressurization step, and of obtaining a product having a volume smaller than a volume of the product obtained through the first pressurization step.

2. The method for producing a fiber-reinforced plastic product according to claim 1,
wherein the additive manufacturing step is a step of obtaining a product in which not all the fibers are integrally bonded together by the resin and the fibers are partially apart from each other.

3. The method for producing a fiber-reinforced plastic product according to claim 1,
wherein the first pressurization step is a step of pressurizing a product obtained through the additive manufacturing step, and of obtaining a product in which most of the fibers are integrally bonded together by the resin and which has a curved portion.

4. A method for producing a fiber-reinforced plastic product comprising fibers and a resin,
the method comprising an additive manufacturing step, a first pressurization step, and a second pressurization step,
wherein the additive manufacturing step is a step of obtaining a product in which not all the fibers are integrally bonded together by the resin and the fibers are partially apart from each other.

5. The method for producing a fiber-reinforced plastic product according to any one of claims 1, 3, or 4,
wherein the first pressurization step is a step of stacking and pressurizing a plurality of products obtained through the additive manufacturing step.

6. The method for producing a fiber-reinforced plastic product according to claim 1 or 4,
wherein pressure applied in the first pressurization step is lower than pressure applied in the second pressurization step.

7. The method for producing a fiber-reinforced plastic product according to claim 1 or 4,
wherein (volume of the product obtained through the first pressurization step)/(volume of the product obtained through the second pressurization step) is 2.5 or less.

8. The method for producing a fiber-reinforced plastic product according to any one of claims 1, 3, or 4,
wherein the first pressurization step is a step of performing pressurization at a temperature equal to or higher than a melting temperature of a resin, the melting temperature being determined by a 1/2 method using a flowtester CFT-500D (available from Shimadzu Corporation).

9. The method for producing a fiber-reinforced plastic product according to claim 1 or 4,
wherein the second pressurization step is a step of performing pressurization at a temperature equal to or higher than a melting temperature of a resin, the melting temperature being determined by a 1/2 method using a flowtester CFT-500D available from Shimadzu Corporation).

10. The method for producing a fiber-reinforced plastic product according to any one of claims 1, 3, or 4,
wherein a heating method in the first pressurization step is a non-contact heating method.

11. The method for producing a fiber-reinforced plastic product according to claim 10,
wherein the non-contact heating method is an induction heating method.

12. The method for producing a fiber-reinforced plastic product according to claim 10,
wherein a mold made of a non-magnetic material is used in the first pressurization step.

13. The method for producing a fiber-reinforced plastic product according to claim 1 or 4,
wherein a heating method in the second pressurization step is a contact heating method.

14. The method for producing a fiber-reinforced plastic product according to claim 13,
wherein a mold made of a metal material is used in the second pressurization step.

15. The method for producing a fiber-reinforced plastic product according to claim 1 or 4,
wherein each of the fibers is an electrically conductive fiber.

16. The method for producing a fiber-reinforced plastic product according to claim 15,
wherein the electrically conductive fiber is a carbon fiber.

17. The method for producing a fiber-reinforced plastic product according to claim 1 or 4,
wherein a ratio of the fibers to the resin used in the additive manufacturing step is such that (volume of the resin)/(volume of the fibers + volume of the resin) is from 30/100 to 55/100.

18. The method for producing a fiber-reinforced plastic product according to claim 1 or 4,
wherein the resin is a thermosetting resin.

19. The method for producing a fiber-reinforced plastic product according to claim 1 or 4,
wherein the resin is a thermoplastic resin.

20. The method for producing a fiber-reinforced plastic product according to claim 1 or 4,
wherein a mold including at least a lower mold, a middle mold, and an upper mold is used in the first pressurization step,
the lower mold includes a curved surface portion,
the upper mold includes a curved surface portion, and the curved surface portion of the upper mold corresponds to the curved surface portion of the lower mold,
the middle mold includes a guide portion that guides a product obtained through the additive manufacturing step toward the lower mold,
the middle mold is disposed with respect to the lower mold, the product obtained through the additive manufacturing step is disposed with respect to the guide portion in the middle mold, the upper mold is disposed with respect to the product disposed with respect to the guide portion, and pressure is applied between the lower mold and the upper mold and thereby a curved portion corresponding to the curved surface portion is formed on the product present between the curved surface portion of the lower mold and the curved surface portion of the upper mold.

21. The method for producing a fiber-reinforced plastic product according to claim 20,
wherein the middle mold includes an upper surface having a flat surface and a lower surface having a curved surface portion corresponding to the curved surface portion of the lower mold,
the guide portion is a vacant space vertically provided in the middle mold, and
the vacant space is connected to the curved surface portion of the lower mold.

22. The method for producing a fiber-reinforced plastic product according to claim 1 or 4,
wherein a mold including at least a lower mold and an upper mold is used in the second pressurization step,
the upper mold and the lower mold include a cavity corresponding to a final product shape when the upper mold is disposed with respect to the lower mold,
the cavity is made up of a channel formed on a surface of the upper mold and a channel formed on a surface of the lower mold,
the channel has a substantially U-shaped cross section, and
a product obtained through the first pressurization step is disposed on the lower mold, the upper mold is disposed from above the product disposed on the lower mold, and pressure is applied between the lower mold and the upper mold.
